(19) Europäisches Patentamt
European Patent Office
Office européen des brevets

(11) **EP 4 526 089 B1**

(12) **EUROPEAN PATENT SPECIFICATION**

(45) Date of publication and mention
of the grant of the patent:
**31.12.2025 Bulletin 2026/01**

(21) Application number: **22731490.3**

(22) Date of filing: **17.05.2022**

(51) International Patent Classification (IPC):
**B25J 9/16** *(2006.01)*

(52) Cooperative Patent Classification (CPC):
**B25J 9/1641; B25J 9/1653;** G05B 2219/39191;
G05B 2219/41122; G05B 2219/41396;
G05B 2219/49197; G05B 2219/49292

(86) International application number:
**PCT/EP2022/063355**

(87) International publication number:
**WO 2023/222208 (23.11.2023 Gazette 2023/47)**

(54) **REDUCING KINEMATIC ERROR**

VERMINDERUNG KINEMATISCHER FEHLER

RÉDUCTION D'ERREUR CINÉMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.03.2025 Bulletin 2025/13**

(73) Proprietor: **ABB Schweiz AG**
**5400 Baden (CH)**

(72) Inventors:
• **WAHRBURG, Arne**
**64331 Weiterstadt (DE)**
• **ROBERTS, Richard**
**82205 Gilching (DE)**
• **NORRLÖF, Mikael**
**602 12 Norrköping (SE)**
• **MOBERG, Stig**
**72219 Västerås (SE)**

(74) Representative: **Maiwald GmbH**
**Engineering**
**Elisenhof**
**Elisenstrasse 3**
**80335 München (DE)**

(56) References cited:
**JP-A- 2011 224 662** **JP-A- 2014 136 260**
**US-A1- 2020 180 153**

• **SHI XIAOLI ET AL: "An FFT-based Method for
Analysis, Modeling and Identification of
Kinematic Error in Harmonic Drives", 6 August
2019, ADVANCES IN DATABASES AND
INFORMATION SYSTEMS; [LECTURE NOTES IN
COMPUTER SCIENCE; LECT.NOTES
COMPUTER], SPRINGER INTERNATIONAL
PUBLISHING, CHAM, PAGE(S) 191 - 202, ISBN:
978-3-319-10403-4, XP047516147**

**Description**

The present invention relates to methods and apparatus for reducing kinematic error when controlling the movement of a joint in a robot manipulator.

A robot manipulator comprises a plurality of links, which are coupled to each other, to a base or to an end effector by rotatable joints. Rotation of such a joint is driven by a motor, typically via a reduction gear. Play and inaccuracy in the manufacture of the motors and gears affects the accuracy with which the position and the speed of an end effector at the distal end of the robot arm can be controlled. Harmonic drive gears are widely used as reduction gears in robots, since they are practically play-free, but inevitable inaccuracies, such as eccentricity of a gearwheel or spline, would still cause the rotation speed of a joint to fluctuate even if its motor could be driven at a perfectly constant speed, so that the position of the joint can deviate from what one would expect based knowing the position of the motor and the transmission ratio of the reduction gear. This deviation is commonly referred to as kinematic error or transmission error. The US2020/180153A1 refers to a speed reducer angular transmission error identification system and a speed reducer angular transmission error identification method. The JP 2011 224662 A refers to a correction parameter identification device or a robot control device. The article by Xiaoli Shi et al, Advances in Databases and Information Systems, Springer International, pages 191-202 (6 August 2019), XP047516147, refers to "An FFT-based method for analysis, modeling and identification of kinematic error in harmonic drives". The JP 2014 136 260 A refers to a control device.

The object of the present invention is to provide simple and cost-efficient way of reducing kinematic error in a robot joint. The invention is set out in the appended set of claims.

According to an aspect of the present invention, this object is achieved by a method for reducing kinematic error in a j-th joint between distal and proximal portions of a manipulator according to claim 1.

The first parameter vector is chosen to define an amplitude of the at least one sinusoid to be zero. The sinusoid can be defined as a weighted sum of sine and cosine functions; in that case weighting coefficients of both would have to be zero. Alternatively it can be defined as a sine or cosine function having an amplitude and a phase; when the amplitude is zero here, the phase has no physical significance and can be assigned any value.

In order to facilitate processing of the evaluation signal, the standard speed should be constant or, at least, substantially constant.

The standard speed can be regarded as substantially constant if effects of external forces acting on the distal portion on the evaluation signal, due e.g. to the weight of the distal portion driving or opposing the movement of the distal portion, can be suppressed by high-pass filtering the evaluation signal. Due to the reduction gear, the speed of rotation of the motor will be much higher than that of the joint. Since the external forces are usually proportional to a sinusoid of the joint angle, these can be suppressed by setting a cutoff frequency lower than the motor frequency and higher than the motor frequency multiplied with the reduction ratio of the reduction gear. The standard speed or a harmonic thereof should correspond to a resonance frequency of the manipulator, i.e. the motor frequency needed to drive the distal portion at the standard speed or a harmonic thereof, preferably the second harmonic, should equal the resonance frequency.

This speed doesn't have no be known in advance; rather, finding it can be a preparatory step of the method of the invention. Specifically, in a preparatory stage of the method, the distal portion can be controlled to rotate at various speeds, and the speed where vibration of the manipulator is strongest can be chosen as the standard speed.

It can be assumed that a robot controller is trying to find the critical speed when a same movement of the distal portion is carried out repeatedly at different speeds, the speed changing from one iteration to the next, and the speed difference between successive iterations occasionally changing its sign, and/or the amount of the speed difference decreasing on each change of sign.

Since the moment of inertia of the manipulator or of parts of it is variable depending on configuration, and for the method of the invention it is desirable to have a low critical speed, the distal portion can be controlled to assume a configuration in which its moment of inertia is maximized, and which should be maintained while the method is carried out.

The evaluation signal represents any measurable quantity that is susceptible to fluctuate due to an imperfection of the motor or the reduction gear. It could be the speed of rotation of the distal member itself, as measured e.g. by a dedicated angle sensor built into the manipulator for measuring rotation of the joint on a downstream side of the reduction gear, a laser scanner or other optical sensing means for observing the manipulator from outside, or the like. According to a preferred embodiment, the evaluation signal is representative of motor torque, since suitable sensing circuitry exists in many legacy manipulators, so that when the method of the invention makes use of this circuitry, it can be implemented in such manipulators by a control software update.

When a harmonic drive gear is used as a reduction gear, its wave generator will usually be connected to the motor output shaft, whereas its flexspline is connected to the output shaft of the reduction gear, and the circular spline is fixed. When the number of teeth of the circular spline is $i_c$, and that of the flexspline is $i_f$, the orientation of the wave generator relative to the flexspline becomes identical after every $i_f/i_c$ rotations of the wave generator ant the motor output shaft, causing contributions to the kinematic error at $m^{i_f}/_{i_c}$ times the rotation frequency of the motor, where m is a small integer. Since is $i_f$ is slightly smaller than $i_c$, contributions of the flexspline and the circular spline to the kinematic error tend to have frequencies that differ slightly from those of the motor and the wave generator.

Experiments have shown that for most harmonic drive gears the most important contribution of the flexspline and the circular spline is at is $2^{i_f}/_{i_c}$ times the rotation frequency.

In order to take account of various sources contributing to the kinematic error, in most practical cases the kinematic correction will be a sum of two or more sinusoids.

The kinematic correction generator can best be provided by programming a processor to operate as such, in particular by updating a control processor of a legacy manipulator to enable it to operate as the kinematic correction generator, or by updating the third parameter vector whenever maintenance or repair work has been carried out at the corresponding joint. According to another aspect of the present invention, the object is achieved by a robotic system according to claim 11.

According to a further aspect, the object is achieved by a computer software product according to claim 12.

Further features and advantages of the invention will become apparent from the subsequent description of embodiments, referring to the appended drawings.

Fig.1    is a block diagram of a robotic system implementing the invention;
Fig. 2    is a perspective view of the manipulator of the system of Fig. 1;
Fig. 3    is a cross section of a harmonic drive gear;
Fig. 4    is a pose assumed by the manipulator while carrying out the method for one of its joints; and
Fig. 5    is a pose assumed by the manipulator while carrying out the method for another of its joints.

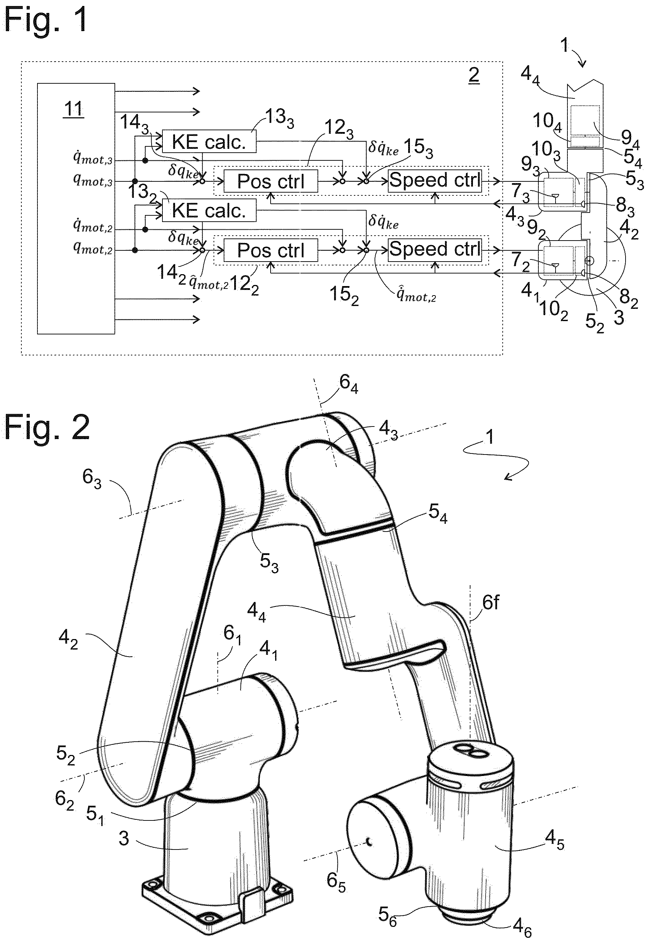

Fig. 1 is a block diagram of a robot system comprising an articulated robot arm 1 and a controller 2, in which the method of the invention can be applied. The robot arm 1, shown in more detail in Fig. 2, has a stationary base 3 fixed to a support, and a plurality of links $4_j$, j=1,..., 6 rotatably connected to each other and to the base 3 by joints $5_j$. The joint $5_5$ connecting links $4_4$, $4_5$ is concealed behind link $4_5$. Each joint $5_j$ enables a rotation of the link $4_j$ on its distal side by an axis $6_j$. Axis $6_1$ is vertical, axes $6_2$ and $6_3$ are horizontal; the orientations of the other axes vary. Each joint $5_j$ has a motor associated to it for driving its rotation; the motor can be provided in a member on the proximal side of the joint and be connected to a member on the distal side thereof, or vice versa. In the robot arm of Fig. 2, joints $5_1$, $5_2$, $5_3$ have their motors in members on their proximal side, i.e. in base 3 and links $4_1$, $4_5$, respectively; joints $5_3$, $5_4$ and $5_5$ have the motors on their distal side, in links $4_3$, $4_4$ and $4_5$, respectively.

Motors $9_2$, $9_3$, $9_4$ associated to joints $5_2$, $5_3$, $5_4$ and reduction gears $10_2$, $10_3$, $10_4$ connecting these motors to links $4_2$, $4_2$ and $4_3$, respectively, are shown in Fig. 1. Each motor $9_j$ is provided with a current sensor $7_j$ for measuring its winding current. Since measurement data from sensor $7_j$ are representative of a torque applied by the motor $9_j$ they will be referred to below as torque data $\tau_{mot}$. A resolver $8_j$ is placed at each joint $5_j$ so as to measure its rotation angle $q^*_{arm,j}$.

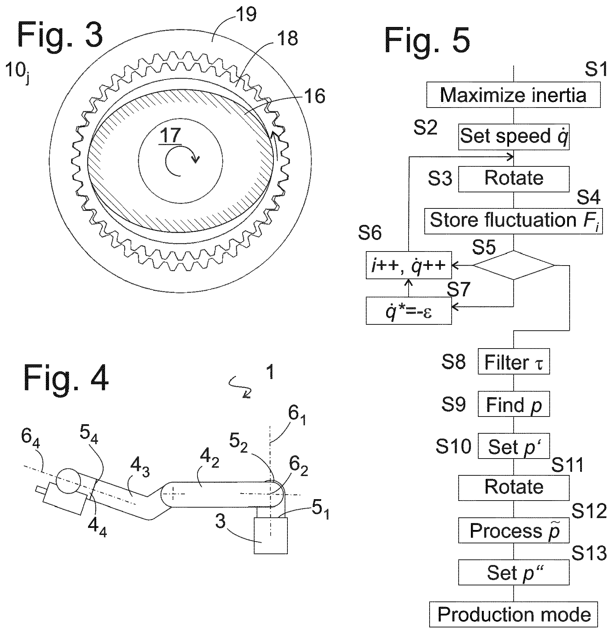

The reduction gear $10_j$ is a harmonic gear, shown in cross section in Fig. 3, in which a wave generator 16 is rigidly coupled to an output shaft 17 of motor $9_j$, and is pressing teeth of a flexspline 18 into local engagement with a circular spline 19 surrounding it. When the number of teeth of the circular spline 19 is $i_c$ and that of the flexspline 18 is $i_f$, the transmission ratio of the gear $10_j$ is $R_j = \dfrac{i_f - i_c}{i_f}$. Since the flexspline is 18 rotating in a direction opposite to that of the wave generator 16, points of the two currently in contact will meet again after the wave generator 16 has rotated by $2\pi^{i_f}/_{i_c}$, slightly less than a complete turn.

Controller 2 comprises a trajectory generator 11 for outputting, with an appropriate timing, position and speed commands to joint controllers $12_j$ associated to a specific joint $5_j$ as would be required for having a reference point of link $4_6$ or of the tool mounted to it follow a predetermined trajectory assuming that the joints are free from kinematic error. Each joint controller $12_j$ further has associated to it a kinematic error calculator $13_j$ for calculating a kinematic error correction $\delta q_{ke}$, $\delta \dot{q}_{ke}$ and adders $14_j$, $15_j$ for superimposing the kinematic error correction onto the commands $q_{mot,j}$, $\dot{q}_{mot,j}$ output by the trajectory generator 11, and providing corrected commands $\hat{q}_{mot,j} = q_{mot,j} + \delta q_{ke}$, $\hat{\dot{q}}_{mot,j} = \dot{q}_{mot,j} + \delta \dot{q}_{ke}$ as will be explained in detail below.

The method of the invention can be carried out for each joint $5_j$ at a time.

In a first step of the method of the invention (S1, see Fig. 5), the manipulator 1 is brought into a configuration where a resonance frequency of it components on the distal side of joint $5_j$ is maximized by moving the centres of gravity of links

$4_j$-$4_6$ as far away from axis $6_j$ as possible, as shown in Fig. 4 for j=2. A counting index i is set to 1, a fluctuation reference $F_0$ is set to 0, and a step width $\Delta\dot{q}$ is initialized.

A rotation speed $\dot{q}_{mot,j}$ for motor $9_j$ is set (S2), and trajectory generator 11 controls a rotation around axis $6_j$ at nominally constant speed by outputting angle commands $q_{mot,j}$ to motor $9_j$ that have a constant rate of change $\dot{q}_{mot,j}$.

In step 3, while the joint $5_j$ is being rotated at the speed set in step S2, imperfections of the motor $9_j$ and the reduction gear $10_j$ cause the current detected by sensor $7_j$ to fluctuate. A measure $F_i$ of this fluctuation, e.g a standard deviation of currents measured while carrying out the rotation, is recorded (S4).

If in step S5, $F_i$-$F_{i-1}$ is found to be positive, and $|\Delta\dot{q}_{mot,j}|$ is above a pre-determined threshold, i is incremented and $\dot{q}_{mot,j}$ is incremented by $\Delta\dot{q}$ in step S6, and the method returns to step S3. If $F_i$-$F_{i-1}$ is found to be negative, $\Delta\dot{q}$ is multiplied by a factor $\varepsilon$ between 0 and -1 (S7) before proceeding to step S6. When successive multiplications by $\varepsilon$ have caused $\Delta\dot{q}$ to drop below the threshold, the amount F of fluctuation has reached a maximum, and it can be assumed that $\dot{q}_{mot,j}$ is the critical speed of joint $5_j$.

Each time step S3 is executed, a series of motor positions and associated torque data $\tau_{mot}$ from sensor $7_j$ are recorded. The last one of these series, comprising N pairs of measurement values $\tau^1_{mot}, \tau^2_{mot}, \ldots, \tau^N_{mot}$ and motor or arm positions at which these were obtained is retained for evaluation. The positions may be taken from commands $q^1_{mot,j}, q^2_{mot,j}, \ldots, q^N_{mot,j}$ of the trajectory generator, preferably they are derived from readings $q^*_{arm,j}$ from resolver $8_j$ taken simultaneously with the torque measurement values.

Optionally, a spectral analysis of this series may be carried out in order to find out the frequency components that provide the largest contribution to the fluctuation of the torque data. Else it may simply be assumed that components which have been found to provide an important contribution in other manipulators will do so here, too.

In step S9, a sum of sinusoids $\sum_{i=1}^{M} A_{i,j} \sin\left(k_i q_{mot,j} + \vartheta_{i,j}\right)$ of M harmonics is fitted to the N collected data points with solving $b = \Theta p$ for the parameter vector p with

$$\Theta = \begin{bmatrix} 1 & \sin\left(k_1 q^1_{mot,j}\right) & \cos\left(k_1 q^1_{mot,j}\right) & \cdots & \sin\left(k_M q^1_{mot,j}\right) & \cos\left(k_M q^1_{mot,j}\right) \\ \vdots & & \vdots & & & \vdots \\ 1 & \sin\left(k_1 q^N_{mot,j}\right) & \cos\left(k_1 q^N_{mot,j}\right) & \cdots & \sin\left(k_M q^N_{mot,j}\right) & \cos\left(k_M q^N_{mot,j}\right) \end{bmatrix}$$

$$b = \begin{bmatrix} \tau^1_{mot} \\ \vdots \\ \tau^N_{mot} \end{bmatrix} \in \mathbb{R}^N \tag{1}$$

and

$$p = \begin{bmatrix} C \\ A_{S,1} \\ A_{C,1} \\ \vdots \\ A_{S,M} \\ A_{C,M} \end{bmatrix} \in \mathbb{R}^{1+2M} ,$$

wherein $k_i$, $i = 1, \ldots, M$ refers to the important frequency components mentioned above. If it is known that the most important frequency components are e.g. at twice the rotation frequency of the motor $9_j$ and at $2 * \dfrac{i_f}{i_c}$ times the rotation frequency of the motor $9_j$, we may set M = 2, $k_2$ = 2 for the second harmonic of the motor rotation and $k_1 = 2\dfrac{i_f}{i_c}$ for a nearby contribution of the harmonic gear. The parameter vector p, referred to below as the feedback parameter vector, contains a sine and cosine value $A_{S,i}$, $A_{C,i}$ for each frequency component (which is equivalent to characterizing the component by an amplitude and a phase) and a constant offset C to handle a constant bias.

If the joint is subject to position-dependent gravity load (as is the case for joint $5_2$ in Fig. 4), the torque data can be subjected to high-pass filtering (S8) prior to their evaluation in step S9. The transmission ratio of gear $10_j$ being $R_j$, the filtering threshold frequency should be between the rotation frequency of motor $9_j$ and $R_j$ times this frequency.

In step S10, a second parameter vector $p' = \begin{bmatrix} C' \\ A'_{S,1} \\ A'_{C,1} \\ \vdots \\ A'_{S,M} \\ A'_{C,M} \end{bmatrix}$ is arbitrarily defined, and is transmitted to kinematic error calculator $13_j$, thereby enabling it to output a kinematic error compensation

$$\delta q_{ke} = \sum_{i=1}^{M} A'_{i,j} \sin\left(k_i q_{mot,j} + \vartheta'_{i,j}\right) \tag{2}$$

$$\delta \dot{q}_{ke} = \sum_{i=1}^{M} k_i A'_{i,j} \cos\left(k_i q_{mot,j} + \vartheta'_{i,j}\right),$$

wherein $A'_{i,j} = \sqrt{A'^2_{S,i} + A'^2_{C,i}}$ and $\vartheta'_{i,j} = \tan^{-1}(A'_{C,i}/A'_{S,i})$, when $q_{mot,j}$ is the motor angle output by trajectory generator 11. In step S11, another rotation around axis $6_j$ is carried out, in which the motor receives commands $q_{mot,j}$, $\dot{q}_{mot,j}$ to which compensations $\delta q_{ke}(q_{mot,\ j})$, $\delta \dot{q}_{ke}(q_{mot,\ j})$ have been added in adders $14_j$, $15_j$. Torque data $b' = (\tau'^1_{mot}, \tau'^2_{mot}, \dots, \tau'^N_{mot})^T$ resulting therefrom are collected, and are evaluated (S12) as described above in steps S8, S9 for torque data $b$, whereby a second feedback parameter vector $\tilde{p} = [\tilde{C}\ \tilde{A}_{S,1}\ \tilde{A}_{C,1}\ \dots\ \tilde{A}_{C,}]^T$ is obtained.

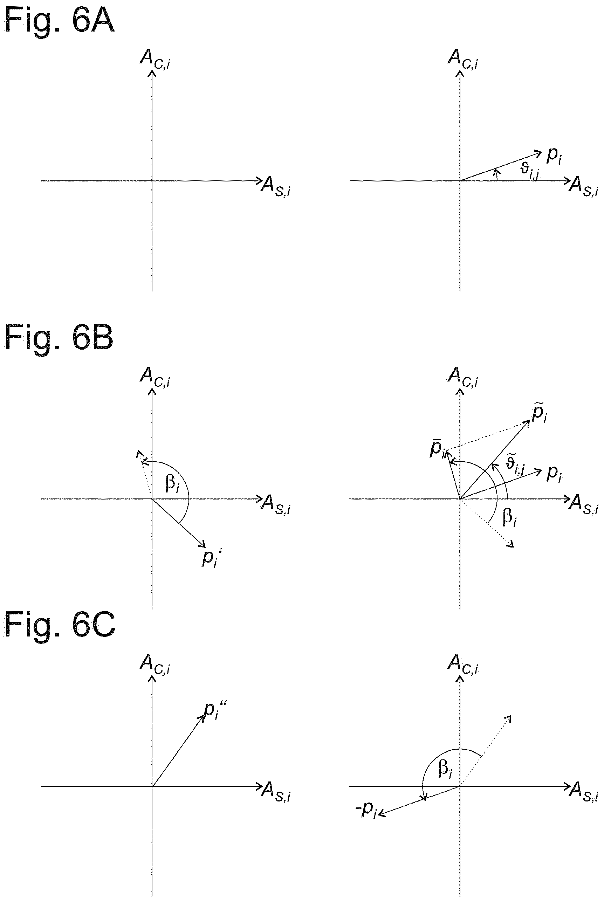

Processing of these data (S12) is described referring to Fig. 6. Fig. 6 is a series of diagrams showing components $A_{S,i}$, $A_{C,i}$ of an arbitrary frequency component $k_i$ of a parameter vector. It should be understood that this two-dimensional representation is chosen only because more than two dimensions are difficult to illustrate graphically; i.e. what the diagrams show are in fact two-dimensional projections of multi-dimensional vectors. The left-hand part of each diagram shows in solid lines components of a parameter vector used by kinematic error calculator $13_j$ to calculate the kinematic error compensation according to eq. (2); the right-hand part shows components of the parameter vector extracted from the torque data using eq. (1).

Fig. 6A illustrates the case of step S3 where the parameter vector used by the kinematic error calculator $13_j$ is 0, but a vector $p \neq 0$ (of which components $p_i$ are shown) is derived from the torque data in step S9.

Fig. 6B illustrates components $p'_i = [A'_{S,i}, A'_{C,i}]$ of the second parameter vector $p'$ and $\tilde{p}_i = [\tilde{A}_{S,i}, \tilde{A}_{C,i}]$ of the second feedback vector $\tilde{p}$ resulting from it. If there wasn't the underlying imperfection that yields the first feedback vector $p \neq 0$ for a parameter vector 0, the second parameter vector $p'$ could be expected to produce an ideal feedback vector $\overline{p} = [\overline{A}_{S,i}, \overline{A}_{C,i}] = \tilde{p} - p$ where $\overline{p}_i$ is related to $p'_i$ by an angle $\beta_i$ between the two and a gain factor $g_i = \sqrt{\overline{A}_{S,i}^2 + \overline{A}_{C,i}^2} \Big/ \sqrt{A'^2_{S,i} + A'^2_{C,i}}$, where $\overline{A}_{S,i} = \tilde{A}_{S,i} - A_{S,i}$ and $\overline{A}_{C,i} = \tilde{A}_{C,i} - A_{C,i}$. I.e. $\beta_i$ and $g_i$ are parameters of a transformation that would transform components $p'_i$ of Fig. 6B into components $\overline{p}_i$. With these parameters known, it is possible to find a parameter vector $p''$ which, by the same transformation, is transformed into $-p$ (Fig. 6C).

This parameter vector $p''$ is transmitted to kinematic error calculator $13_j$ in step S13, so as to cause it, in the future, to calculate the kinematic error correction by inserting components of $p''$ in eq. (2).

This process is carried out for one joint after the other. When afterwards (S14) the controller 2 enters production mode with all kinematic error calculator $13_j$, applying the correction of eq. 2, speed fluctuations of the reference point due to imperfections of the reduction gears $10_j$ are substantially cancelled.

**Reference numerals**

1      manipulator
2      controller
3      base
4      link
5      joint
6      axis
7      acceleration sensor
8      resolver
9      motor
10     harmonic drive gear

| 11 | trajectory generator |
|---|---|
| 12 | joint controller |
| 13 | kinematic error calculator |
| 14 | adder |
| 15 | adder |
| 16 | wave generator |
| 17 | output shaft |
| 18 | flexspline |
| 19 | circular spline |

## Claims

1. A method for reducing kinematic error in a joint ($5_j$) between a distal portion and a proximal portion of a manipulator (1), the joint ($5_j$) having associated to it a motor ($9_j$) mounted in one of said portions and coupled to the other one of said portions for driving rotation of the distal portion relative to the proximal portion by a reduction gear ($10_j$), the method comprising the steps of:

   a. providing a kinematic correction generator (13j) which is programmable using a parameter vector ($0, p', p''$) for outputting, based on said parameter vector and a position ($q_{mot,j}$) input, wherein the position ($q_{mot,j}$) is a motor angle command output by a trajectory generator (11), a kinematic correction ($\delta q_{ke}, \delta \dot{q}_{ke}$) which is at least one sinusoid having

   - a frequency ($k_i$) which is a frequency of rotation of the motor ($9_j$) or of a periodic event in the reduction gear ($10_j$) occurring at a higher frequency than the rotation of the distal portion, or an integer multiple thereof, and
   - an amplitude and a phase defined by said parameter vector ($0, p', p''$),

   b. outputting to the motor a first drive control signal specifying a motor speed which is a sum of a standard speed ($\dot{q}_{mot,j}$), wherein the standard speed ($\dot{q}_{mot,j}$) is a rotation speed command for the motor ($9_j$) which is output by the trajectory generator (11), and a first kinematic correction ($\delta \dot{q}_{ke}$) output by the kinematic correction generator ($13_j$) based on a first parameter vector (0) defining an amplitude of the at least one sinusoid to be zero;
   c. extracting, from an evaluation signal ($\tau$) received from the joint ($5_j$) in response to the first drive control signal, wherein the evaluation signal ($\tau$) represents any measurable quantity that is susceptible to fluctuate due to an imperfection of the motor or the reduction gear ($10_j$), at least one frequency component having the frequency ($k_i$) of the at least one sinusoid, and determining a first feedback parameter vector ($p$) defining a first feedback amplitude ($A_{i,j}$) and a first feedback phase ($\vartheta_{i,j}$) of said frequency component,
   d. outputting to the motor ($9_j$) a second drive control signal specifying a motor speed ($\dot{q}_{mot,j} + \delta \dot{q}_{ke}$) which is a sum of the standard speed ($\dot{q}_{mot,j}$) and a second kinematic correction ($\delta \dot{q}_{ke}$) output by the kinematic correction generator ($13_j$) based on a second parameter vector ($p'$) which is arbitrarily defined;
   e. extracting, from an evaluation signal ($\tau$) received from the joint ($5_j$) in response to the second drive control signal, wherein the evaluation signal ($\tau$) represent any measurable quantity that is susceptible to fluctuate due to an imperfection of the motor or the reduction gear ($10_j$), a frequency component having the frequency ($k_i$) of the at least one sinusoid, and determining a second feedback parameter vector ($\tilde{p}$) defining a second feedback amplitude ($\tilde{A}_{i,j}$) and a second feedback phase ($\tilde{\vartheta}_{i,j}$) of said frequency component,
   f. subtracting said first feedback vector ($p$) from said second feedback vector ($\tilde{p}$) to obtain a feedback difference vector ($\bar{p}$);
   g. finding a transformation which transforms said feedback difference vector ($\bar{p}$) into a difference ($p' - 0$) between second and first parameter vectors,
   h. applying the transformation to the second feedback vector ($\tilde{p}$) to obtain a third parameter vector ($p''$),
   i. programming the kinematic correction generator ($13_j$) using the third parameter vector ($p''$) to calculate the kinematic correction during a production mode of the manipulator (1).

2. The method of claim 1, wherein the standard speed ($\dot{q}_{mot,j}$) is a constant speed.

3. The method of any of the preceding claims, wherein the step of extracting the frequency component having the frequency of the at least one sinusoid comprises high-pass filtering (S8) the evaluation signal ($\tau$), a cutoff frequency optionally being lower than the motor frequency and higher than the motor frequency multiplied with the reduction ratio ($R_j$) of the reduction gear.

4. The method of any of the preceding claims, wherein the standard speed ($\dot{q}_{mot,j}$) or a harmonic thereof corresponds to a resonance frequency of the manipulator (1).

5. The method of claim 4, further comprising at least one of the following steps:

- controlling the distal portion to rotate at various speeds (S3) and choosing (S5) as the standard speed ($\dot{q}_{mot,j}$) the one of those various speeds where vibration of the manipulator (1) is strongest;
- controlling (S1) the distal portion to assume a configuration where its moment of inertia is maximized.

6. The method of any of the preceding claims, wherein the evaluation signal ($\tau$) is representative of motor torque.

7. The method of any of the preceding claims, wherein the reduction gear ($10_j$) is a harmonic gear having a circular spline (19) with $i_c$ teeth and a flexspline (18) with $i_f$ teeth, and the frequency of the at least one sinusoid is $i_f/i_c$ times the rotation frequency of the motor ($9_j$) or an integer multiple thereof.

8. The method of claim 7, wherein the integer multiple is 2 $i_f$ / $i_c$ times the rotation frequency.

9. The method of any of the preceding claims, wherein the kinematic correction ($\delta q_{ke}$, $\delta \dot{q}_{ke}$) is a sum of two or more sinusoids.

10. The method of any of the preceding claims, wherein the step of providing the kinematic correction generator ($13_j$) comprises programming a processor to operate as the kinematic correction generator.

11. A robotic system comprising

- a manipulator (1) having a proximal portion, a distal portion, a joint connecting ($5_j$) said proximal and distal portions and a motor ($9_j$) for driving rotation of the joint ($5_j$) by a reduction gear ($10_j$);
- a controller (2) including a trajectory generator (11), a kinematic correction generator ($13_j$) and a joint controller ($12_j$), the controller (2) connected to the motor ($9_j$) and adapted to carry out the method according to one of claims 1 to 10.

12. A computer software product comprising a plurality of machine-readable instructions which, when executed by the controller (2) of the robotic system of claim 11, cause the controller (2) to carry out the method according to any of claims 1 to 10.

**Patentansprüche**

1. Verfahren zur Reduzierung des kinematischen Fehlers in einem Gelenk ($5_j$) zwischen einem distalen und einem proximalen Abschnitt eines Manipulators (1), wobei dem Gelenk ($5_j$) ein Motor ($9_j$) zugeordnet ist, der in einem der Abschnitte montiert und über ein Untersetzungsgetriebe ($10_j$) mit dem anderen Abschnitt gekoppelt ist, um die Drehung des distalen Abschnitts relativ zum proximalen Abschnitt anzutreiben, wobei das Verfahren folgende Schritte umfasst:

a. Bereitstellung eines kinematischen Korrekturgenerators ($13_j$), der über einen Parametervektor (0,p',p") programmierbar ist zum Ausgeben, basierend auf diesem Parametervektor und einem Positionseingang ($q_{mot,j}$), wobei die Position ($\dot{q}_{mot,j}$) der vom Trajektoriengenerator (11) ausgegebene Motorwinkelbefehl ist, eine kinematische Korrektur ($\delta q_{ke}$, $\delta \dot{q}_{ke}$) ausgibt, die mindestens eine Sinusfunktion mit folgenden Eigenschaften ist:

- einer Frequenz ($k_i$), die der Rotationsfrequenz des Motors ($9_j$) oder eines periodischen Ereignisses im Untersetzungsgetriebe ($10_j$) entspricht, das mit einer höheren Frequenz als die Rotation des distalen Abschnitts auftritt, oder einem ganzzahligen Vielfachen davon, und
- einer Amplitude und einer Phase, die durch den Parametervektor (0,p',p") definiert sind,

b. Ausgabe eines ersten Ansteuersignals an den Motor, das eine Motordrehzahl festlegt, die sich aus einer Solldrehzahl ($\dot{q}_{mot,j}$) wobei die Solldrehzahl ($\dot{q}_{mot,j}$) ein für Motor 9j festgelegter Rotationsgeschwindigkeitsbefehl für den Motor ($9_j$) ist, der von dem Trajektoriengenerator (11) ausgegeben wird, und einer ersten kinematischen

Korrektur $(\delta \dot{q}_{ke})$, die vom kinematischen Korrekturgenerator (13j) basierend auf einem ersten Parametervektor (0) ausgegeben wird, um die Amplitude mindestens einer Sinuswelle auf Null zu setzen;

c. Extrahieren aus einem Auswertungssignal $(\tau)$, das vom Gelenk (5j) als Reaktion auf das erste Antriebssteuersignal empfangen wird, wobei das Auswertungssignal $(\tau)$ eine beliebige messbare Größe darstellt, die aufgrund einer Unvollkommenheit des Motors oder des Untersetzungsgetriebes (10j) Schwankungen unterliegen kann, mindestens eine Frequenzkomponente mit der Frequenz $(k_i)$ der mindestens einen Sinuswelle, und Bestimmen eines ersten Rückkopplungsparametervektors (p), der eine erste Rückkopplungsamplitude $(A_{i,j})$ und eine erste Rückkopplungsphase $(\vartheta_{i,j})$ dieser Frequenzkomponente definiert,

d. Ausgabe eines zweiten Ansteuersignals an den Motor (9j), das eine Motordrehzahl $(\dot{q}_{mot,j} + \delta \dot{q}_{ke})$ vorgibt, die eine Summe der Standarddrehzahl $(\dot{q}_{mot,j})$ und einer zweiten kinematischen Korrektur $(\delta \dot{q}_{ke})$ ist, die vom kinematischen Korrekturgenerator (13j) auf der Grundlage eines zweiten Parametervektors (p') ausgegeben wird, der beliebig definiert ist;

e. Extrahieren aus einem vom Gelenk (5j) als Reaktion auf das zweite Antriebssteuersignal empfangenen Auswertungssignal $(\tau)$, wobei das Auswertungssignal $(\tau)$ eine beliebige messbare Größe darstellt, die aufgrund einer Ungenauigkeit des Motors oder des Untersetzungsgetriebes (10j) Schwankungen unterliegt, eine Frequenzkomponente mit der Frequenz $(k_i)$ mindestens einer Sinuswelle, wobei anschließend wird ein zweiter Rückkopplungsparametervektor $(\tilde{p})$ bestimmt, der eine zweite Rückkopplungsamplitude $(\tilde{A}_{i,j})$ und eine zweite Rückkopplungsphase $(\tilde{\vartheta}_{i,j})$ dieser Frequenzkomponente definiert;

f. Subtrahieren des ersten Rückkopplungsvektors (p) vom zweiten Rücckopplungsvektor $(\tilde{p})$, um einen Rückkopplungsdifferenzvektor $(\overline{p})$ zu erhalten;

g. Finden einer Transformation, die den Rückkopplungsdifferenzvektor $(\overline{p})$ in eine Differenz (p'-0) zwischen dem zweiten und dem ersten Parametervektor überführt,

h. Anwenden der Transformation auf den zweiten Rückkopplungsvektor (p ˜), um einen dritten Parametervektor (p") zu erhalten,

i. Programmieren des kinematischen Korrekturgenerators (13j) mit dem dritten Parametervektor (p"), um die kinematische Fehlerkorrektur während eines Produktionsmodus des Manipulators (1) zu berechnen.

2. Verfahren nach Anspruch 1, wobei die Standardgeschwindigkeit $(\dot{q}_{mot,j})$ eine konstante Geschwindigkeit ist.

3. Das Verfahren nach einem der vorhergehenden Ansprüche, wobei der Schritt der Extraktion der Frequenzkomponente mit der Frequenz der mindestens einen Sinuswelle das Hochpassfiltern (S8) des Auswertungssignals $(\tau)$ umfasst, wobei die Grenzfrequenz optional niedriger als die Motorfrequenz und höher als die Motorfrequenz multipliziert mit dem Untersetzungsverhältnis $(R_j)$ des Untersetzungsgetriebes ist.

4. Verfahren nach einem der vorhergehenden Ansprüche, wobei die Standardgeschwindigkeit $(\dot{q}_{mot,j})$ oder eine ihrer Harmonischen einer Resonanzfrequenz des Manipulators (1) entspricht.

5. Verfahren nach Anspruch 4, ferner umfassend mindestens einen der folgenden Schritte:

- Steuern des distalen Abschnitts zur Rotation mit verschiedenen Geschwindigkeiten (S3) und Wählen (S5) derjenigen dieser Geschwindigkeiten als Standardgeschwindigkeit $(\dot{q}_{mot,j})$, bei der die Schwingung des Manipulators (1) am stärksten ist;
- Steuern (S1) des distalen Abschnitts zur Annahme einer Konfiguration, in der sein Trägheitsmoment maximiert ist.

6. Verfahren nach einem der vorhergehenden Ansprüche, wobei das Auswertungssignal $(\tau)$ das Motordrehmoment repräsentiert.

7. Verfahren nach einem der vorhergehenden Ansprüche, wobei das Untersetzungsgetriebe $(10_j)$ ein Harmonic-Getriebe mit einer Kreisverzahnung (19) mit $i_c$ Zähnen und einer Flexverzahnung (18) mit $i_f$ Zähnen ist und die Frequenz der mindestens einen Sinuswelle $i_f/i_c$ mal der Drehzahl des Motors $(9_j)$ oder einem ganzzahligen Vielfachen davon beträgt.

8. Verfahren nach Anspruch 7, wobei das ganzzahlige Vielfache das $2^{i_f}/i_c$ -fache der Rotationsfrequenz ist.

9. Verfahren nach einem der vorhergehenden Ansprüche, wobei die kinematische Korrektur ($\delta q_{ke}$, $\delta \dot{q}_{ke}$) die Summe zweier oder mehrerer Sinuswellen ist.

10. Verfahren nach einem der vorhergehenden Ansprüche, wobei der Schritt der Bereitstellung des kinematischen Korrekturgenerators ($13_j$) das Programmieren eines Prozessors zur Funktion als kinematischer Korrekturgenerator umfasst.

11. Ein Robotersystem, umfassend:

- einen Manipulator (1) mit einem proximalen Abschnitt, einem distalen Abschnitt, einem Gelenk ($5_j$) zwischen diesen Abschnitten und einem Motor ($9_j$) zur Drehung des Gelenks ($5_j$), durch ein Untersetzungsgetriebe (10j);
- eine Steuereinheit (2) umfassend einen Trajektorengenerator (11), einen kinematischen Korrekturgenerator ($13_j$) and eine Steuereinheit ($12_j$), wobei der Controller (2) mit dem Motor ($9_j$) verbunden ist und zur Durchführung des Verfahrens nach einem der Ansprüche 1 bis 10 geeignet ist.

12. Ein Computersoftwareprodukt, umfassend mehrere maschinenlesbare Anweisungen, die, wenn sie von dem Controller (2) des Robotersystems nach Anspruch 11 ausgeführt werden, den Controller (2) veranlassen, das Verfahren nach einem der Ansprüche 1 bis 10 durchzuführen.

**Revendications**

1. Procédé pour réduire une erreur cinématique dans une articulation ($5_j$) entre une partie distale et une partie proximale d'un manipulateur (1), l'articulation ($5_j$) ayant, associée à celle-ci, un moteur ($9_j$) monté dans une desdites parties et couplé à l'autre desdites parties pour entraîner la rotation de la partie distale relativement à la partie proximale par le biais d'un engrenage réducteur ($10_j$), le procédé comprenant les étapes de :

a. la fourniture d'un générateur de correction cinétique (13j) qui est programmable en utilisant un vecteur paramétrique (0,p',p") pour envoyer, sur la base dudit vecteur paramétrique et d'une position ($q_{mot,j}$) entrée, dans lequel la position ($q_{mot,j}$) est une consigne d'angle de moteur envoyée par un générateur de trajectoire (11), une correction cinématique ($\delta q_{ke}$, $\delta \dot{q}_{ke}$) qui est au moins un sinusoïde ayant

- une fréquence ($k_i$) qui est une fréquence de rotation du moteur ($9_j$) ou d'un événement périodique dans l'engrenage réducteur ($10_j$) se produisant à une fréquence plus élevée que la rotation de la partie distale, ou un multiple entier de celle-ci, et
- une amplitude et une phase définie par ledit vecteur paramétrique (0,p',p"),

b. l'envoi, au moteur, d'un premier signal de commande d'entraînement spécifiant une vitesse de moteur qui est une somme d'une vitesse standard ($\dot{q}_{mot,j}$), dans lequel la vitesse standard ($\dot{q}_{mot,j}$) est une consigne de vitesse de rotation pour le moteur ($9_j$) qui est envoyée par le générateur de trajectoire (11) ; et d'une première correction cinématique ($\delta \dot{q}_{ke}$) envoyée par le générateur de correction cinétique ($13_j$) sur la base d'un premier vecteur paramétrique (0) définissant une amplitude de l'au moins un sinusoïde pour qu'elle soit zéro ;
c. l'extraction, depuis un signal d'évaluation ($\tau$) reçu en provenance de l'articulation ($5_j$) en réponse au premier signal de commande d'entraînement, dans lequel le signal d'évaluation ($\tau$) représente une quelconque quantité mesurable qui est susceptible de fluctuer en raison d'une imperfection du moteur ou de l'engrenage réducteur ($10_j$), d'au moins une composante de fréquence ayant la fréquence ($k_i$) de l'au moins un sinusoïde, et la détermination d'un premier vecteur paramétrique de rétroaction (p) définissant une première amplitude de rétroaction ($A_{i,j}$) et une première phase de rétroaction ($\vartheta_{i,j}$) de ladite composante de fréquence ;
d. l'envoi, au moteur ($9_j$), d'un second signal de commande d'entraînement spécifiant une vitesse de moteur ($\dot{q}_{mot,j}+\delta \dot{q}_{ke}$) qui est une somme de la vitesse standard ($\dot{q}_{mot,j}$) et d'une seconde correction cinématique ($\delta \dot{q}_{ke}$) envoyée par le générateur de correction cinétique ($13_j$) sur la base d'un deuxième vecteur paramétrique (p') qui est défini arbitrairement ;
e. l'extraction, depuis un signal d'évaluation ($\tau$) reçu en provenance de l'articulation ($5_j$) en réponse au second signal de commande d'entraînement, dans lequel le signal d'évaluation ($\tau$) représente une quelconque quantité mesurable qui est susceptible de fluctuer en raison d'une imperfection du moteur ou de l'engrenage réducteur ($10_j$), d'une composante de fréquence ayant la fréquence ($k_i$) de l'au moins un sinusoïde, et la détermination d'un deuxième vecteur paramétrique de rétroaction ($\tilde{p}$) définissant une seconde amplitude de rétroaction ($\tilde{A}_{i,j}$) et une seconde phase de rétroaction ($\tilde{\vartheta}_{i,j}$) de ladite composante de fréquence,

f. la soustraction dudit premier vecteur de rétroaction (p) dudit second vecteur de rétroaction (p) pour obtenir un vecteur de différence de rétroaction ($\bar{p}$) ;

g. la découverte d'une transformation qui transforme ledit vecteur de différence de rétroaction ($\bar{p}$) en une différence (p'-0) entre les deuxième et premier vecteurs paramétriques,

h. l'application de la transformation au second vecteur de rétroaction (p) pour obtenir un troisième vecteur paramétrique (p"),

i. la programmation du générateur de correction cinétique ($13_j$) en utilisant le troisième vecteur paramétrique (p") pour calculer la correction cinématique durant un mode de fabrication du manipulateur (1).

2. Procédé de la revendication 1, dans lequel la vitesse standard ($\dot{q}_{mot,j}$) est une vitesse constante.

3. Procédé de quelconques des revendications précédentes, dans lequel l'étape de l'extraction de la composante de fréquence ayant la fréquence de l'au moins un sinusoïde comprend le filtrage passe-haut (S8) du signal d'évaluation ($\tau$), une fréquence de coupe étant facultativement plus basse que la fréquence de moteur et plus haute que la fréquence de moteur multipliée avec le rapport de réduction ($R_j$) de l'engrenage réducteur.

4. Procédé de quelconques des revendications précédentes, dans lequel la vitesse standard ($\dot{q}_{mot,j}$) ou une harmonique de celle-ci correspond à une fréquence de résonance du manipulateur (1).

5. Procédé de la revendication 4, comprenant en outre au moins une parmi les étapes suivantes :

- la commande de la partie distale pour entrer en rotation à des diverses vitesses (S3) et la sélection (S5), en tant que vitesse standard ($\dot{q}_{mot,j}$), de l'une de ces diverses vitesses où la vibration du manipulateur (1) est la plus forte ;
- la commande (S1) de la partie distale pour adopter une configuration où son moment d'inertie est maximisé.

6. Procédé de quelconques des revendications précédentes, dans lequel le signal d'évaluation ($\tau$) est représentatif de couple de moteur.

7. Procédé de quelconques des revendications précédentes, dans lequel l'engrenage réducteur ($10_j$) est un engrenage harmonique ayant un cannelure circulaire (19) avec $i_c$ dents et une cannelure flexible (18) avec $i_f$ dents, et la fréquence de l'au moins un sinusoïde est $i_f/i_c$ fois la fréquence de rotation du moteur (9j) ou un multiple entier de celle-ci.

8. Procédé de la revendication 7, dans lequel le multiple entier est 2 $i_f/i_c$ fois la fréquence de rotation.

9. Procédé de quelconques des revendications précédentes, dans lequel la correction cinématique ($\delta q_{ke}, \delta q_{xe}$) est une somme de deux ou de plus de deux sinusoïdes.

10. Procédé de quelconques des revendications précédentes, dans lequel l'étape de la fourniture du générateur de correction cinétique ($13_j$) comprend la programmation d'un processeur pour fonctionner en tant que générateur de correction cinétique.

11. Système robotique, comprenant

- un manipulateur (1) ayant une partie proximale, une partie distale, une articulation reliant ($5_j$) lesdites parties proximale et distale et un moteur ($9_j$) pour entraîner la rotation de l'articulation ($5_j$) par le biais d'un engrenage réducteur ($10_j$) ;
- un dispositif de commande (2) incluant un générateur de trajectoire (11), un générateur de correction cinétique ($13_j$) et un dispositif de commande d'articulation ($12_j$), le dispositif de commande (2) étant connecté au moteur ($9_j$) et adapté pour effectuer le procédé selon l'une des revendications 1 à 10.

12. Produit logiciel d'ordinateur, comprenant une pluralité d'instructions lisibles par machine qui, lorsqu'elles sont exécutées par le dispositif de commande (2) du système robotique de la revendication 11, amènent le dispositif de commande (2) à effectuer le procédé selon de quelconques des revendications 1 à 10.

# Fig. 1

# Fig. 2

# Fig. 3

$10_j$

19
18
16
17

# Fig. 4

1

$6_4$ $5_4$ $4_3$ $4_2$ $6_1$ $5_2$ $6_2$
$4_4$ 3 $5_1$

# Fig. 5

| S1 | Maximize inertia |
| S2 | Set speed $\dot{q}$ |
| S3 | Rotate |
| S4 | Store fluctuation $F_i$ |
| S5 | |
| S6 | $i$++, $\dot{q}$++ |
| S7 | $\dot{q}$*=-ε |
| S8 | Filter τ |
| S9 | Find $p$ |
| S10 | Set $p'$ |
| S11 | Rotate |
| S12 | Process $\tilde{p}$ |
| S13 | Set $p''$ |
| | Production mode |

## Fig. 6A

## Fig. 6B

## Fig. 6C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020180153 A1
- JP 2011224662 A
- JP 2014136260 A

**Non-patent literature cited in the description**

- **XIAOLI SHI et al.** Advances in Databases and Information Systems. Springer International, 06 August 2019, 191-202